(19) Europäisches Patentamt
European Patent Office
Office européen des brevets

(11) EP 3 540 634 A1

(12) EUROPEAN PATENT APPLICATION

(43) Date of publication:
18.09.2019 Bulletin 2019/38

(51) Int Cl.:
G06K 9/00 (2006.01)    G06K 9/62 (2006.01)

(21) Application number: 18305270.3

(22) Date of filing: 13.03.2018

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: InterDigital CE Patent Holdings
75017 Paris (FR)

(72) Inventors:
• DUONG, Quang Khanh Ngoc
  35576 Cesson-Sévigné (FR)
• OZEROV, Alexey
  35576 Cesson-Sévigné (FR)
• PAREKH, Sanjeel
  35576 Cesson-Sévigné (FR)
• ESSID, Slim
  75013 Paris (FR)
• RICHARD, Gael
  75013 Paris (FR)
• PEREZ, Patrick
  35576 Cesson-Sévigné (FR)

(74) Representative: Huchet, Anne et al
InterDigital CE Patent Holdings
20, rue Rouget de Lisle
92130 Issy-les-Moulineaux (FR)

(54) **METHOD FOR AUDIO-VISUAL EVENTS CLASSIFICATION AND LOCALIZATION AND CORRESPONDING APPARATUS COMPUTER READABLE PROGRAM PRODUCT AND COMPUTER READABLE STORAGE MEDIUM**

(57) A method and an apparatus for audio-visual events classification and localization in a video sequence are disclosed. A set of audio event proposals from an audio stream of the video sequence and a set of visual object proposals from images of the video sequence are obtained. A first score for the set of visual object proposals is determined with regards to a set of audio-visual event classes, A second score for the set of audio event proposals is determined with regards to the set of audio-visual event classes. A video-level score is determined by combining the first score and the second score.

FIG. 4

## Description

### 1. Technical field

The present disclosure relates to audio-visual events (objects) classification and localization. Methods for audio-visual events classification and localization and corresponding apparatus computer readable program product and computer readable storage medium are described.

### 2. Background art

Both, the real-world and our perception are invariably multi-modal, that is any event may be characterized by at least audio and visual features. Many events in our daily life are characterized by specific discriminative sensory inputs. For example, specifically with regard to complex auditory environments, a barking dog or a car passing by would both have distinctive audio-visual (AV) content. Humans develop a remarkable ability to associate and use this information to understand and interact with the environment. This enables them to carry out various tasks including classification and spatio-temporal modality specific localization with ease.

However, when it comes to automatic classification performed by a device, audio-visual events classification and localization in a video sequence become more difficult. There are no existing deep architectures for the task of simultaneous classification and localization of AV events.

Some related works have dealt with unsupervised training of deep architectures to learn representations which can then be used for supervised classification, as in [R. Arandjelovic and a. Zisserman, 2017, Look, Listen and Learn, in International Conference on Computer Vision], wherein audio and visual networks are trained from scratch, without any additional supervision other than raw unconstrained input videos. Such a scheme is designed to provide an indication whether a given audio element corresponds to a video element.

However, such a scheme uses unsupervised training and is not suitable for a system wherein it is desired to localize AV elements that depict a predefined class. Moreover, by design, these networks do not deal with the difficult case of unsynchronized AV events where audio and visual presence of the elements depicting a class is mis-matched in time.

Therefore, there is a need for a new method for audio-visual event classification and localization.

### 3. Summary

The present principles enable at least one of the above disadvantages to be resolved by proposing a method for audio-visual events classification and localization in a video sequence. According to at least some embodiments of the present disclosure, the method comprises:

- obtaining a set of audio event proposals from an audio stream of the video sequence,
- obtaining a set of visual object proposals from images of the video sequence,
- determining a first score for the set of visual object proposals with regards to a set of audio-visual event classes,
- determining a second score for the set of audio event proposals with regards to the set of audio-visual event classes,
- determining a video-level score by combining the first score and the second score. According to another aspect, the present disclosure concerns an apparatus for audio-visual events classification and localization in a video sequence.

According to at least some embodiments of the present disclosure, the apparatus comprises:

- means for obtaining a set of audio event proposals from an audio stream of the video sequence,
- means for obtaining a set of visual object proposals from images of the video sequence,
- means for determining a first score for the set of visual object proposals with regards to a set of audio-visual event classes,
- means for determining a second score for the set of audio event proposals with regards to the set of audio-visual event classes,
- means for determining a video-level score by combining the first score and the second score.

### 4. List of the drawings

The present disclosure can be better understood, and other specific features and advantages can emerge upon reading the following description, the description referring to the annexed drawings wherein:

- Figure 1 illustrates a pictorial representation of audio-visual event classification and localization in an exemplary video sequence,
- Figure 2 illustrates an overview of an exemplary system for audio-visual events classification and localization, according to an embodiment of the present disclosure,
- Figure 3 further illustrates the exemplary system for audio-visual events classification and localization, according to an embodiment of the present disclosure,
- Figure 4 illustrates an exemplary method for audio-visual events classification and localization, according to an embodiment of the present disclosure,
- Figure 5 illustrates an exemplary method for determining a score for audio or visual proposals, with regards to a set of classifiers, according to an embodiment of the present disclosure,

- Figure 6 illustrates an exemplary apparatus for audio-visual events classification and localization according to an embodiment of the present disclosure.

## 5. Description of embodiments

The present disclosure relates to classification and localization for synchronised and/or unsynchronized audio-visual events.

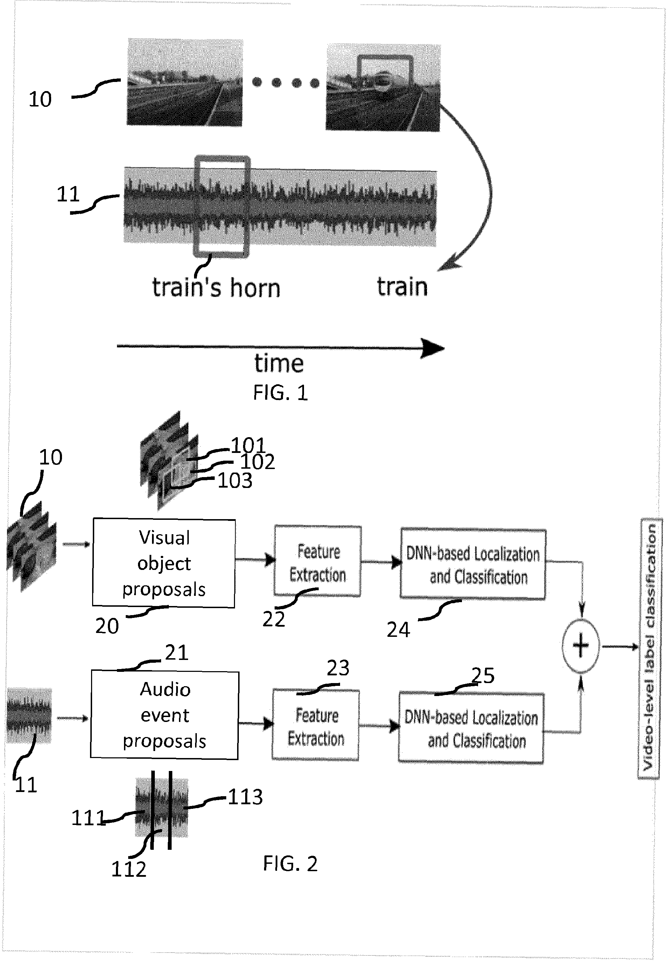

Figure 1 illustrates a pictorial representation of a result of audio-visual event classification and localization in an exemplary video sequence. Given a video labeled as 'train', an aim of the present disclosure is to localize both the visual presence of the train in the video images 10 and the characteristic sound (train's horn) of the train in the audio recording 11. It is to be noted that the train horn may sound before the train is visible, yielding to unsynchronized audio-visual events.

Figure 2 illustrates an overview of an exemplary system for audio-visual events classification and localization, according to an embodiment of the present disclosure.

Given a video, module 20 extracts visual object proposals (101, 102, 103) from the images 10 of the video, and module 21 extracts audio event proposals (111, 112, 113) from the audio stream 11 of the video. The audio stream 11 may be in the form of a 1D waveform or in the form of a 2D visual spectrogram as illustrated by reference 11 in figure 2.

Visual object proposals may correspond to spatial regions in images of the video or to spatio-temporal tubes. A spatio-temporal tube corresponds to a spatial region tracked along several consecutive images of the video. In the following, visual object proposal may be referred as region proposal.

Audio event proposals may correspond to overlapping or non-overlapping temporal segments from the audio stream, or to overlapping or non-overlapping spatio-temporal regions in the spectrogram of the audio stream, or to any statistical model-based proposal such as non-negative matrix factorization-based proposals. In the following, audio event proposal may be referred as segment proposal.

A feature extractor (22, 23) extracts characteristic features respectively for each of the visual object proposals and audio event proposals. The output of the feature extractor 22 for visual object proposals is then input to a module 24 for localization and classification based on a pre-trained deep neural network (DNN) to provide a visual score for the video sequence. In a same way, the output of the feature extractor 23 for audio event proposals is then input to a module 25 for localization and classification based on a pre-trained deep neural network (DNN) to provide an audio score for the video sequence.

The visual score and audio score are then combined to provide a video-level label classification for the input video sequence.

According to at least one embodiment of the present disclosure, a multimodal deep architecture for audio-visual event classification and localization is disclosed. Here, the term "localization" refers to spatio-temporal localization of the audio-visual event in the video, like a spatio-temporal localization of an image region in a visual part of the video, i.e. in the images of the video, a temporal localization and/or spatio-temporal localization of the audio-visual event in the audio part of the video.

The design of the system disclosed above can be modular which can make it both flexible and practical. It allows to simultaneously classify and localize audio-visual events and to deal with the difficult case of unsynchronized AV events.

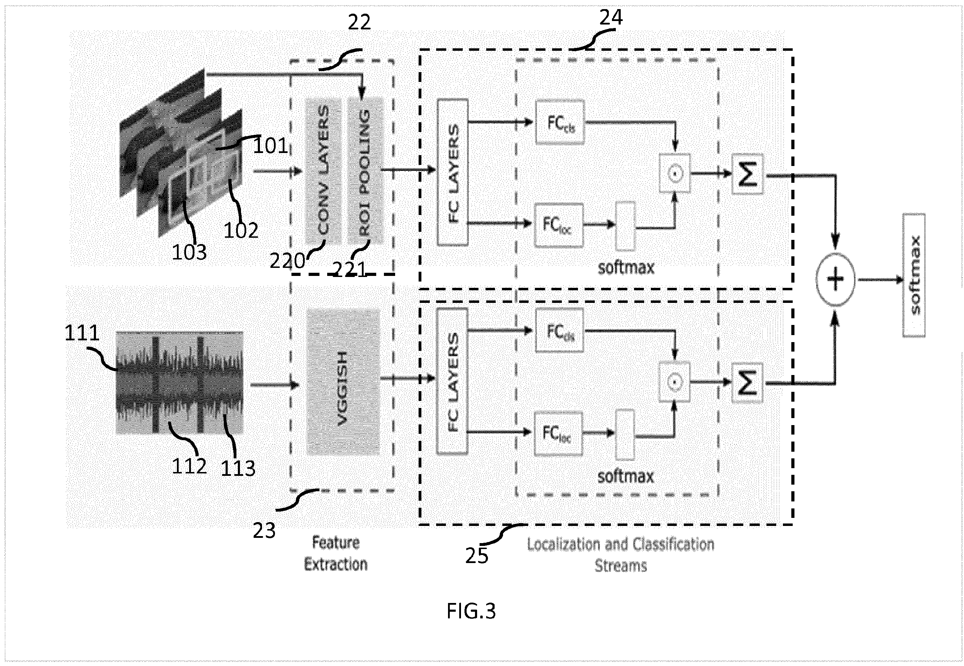

Figure 3 further illustrates the pre-trained DNN-based localization and classification modules of the exemplary system for audio-visual events classification and localization illustrated in figure 2, according to an embodiment of the present disclosure.

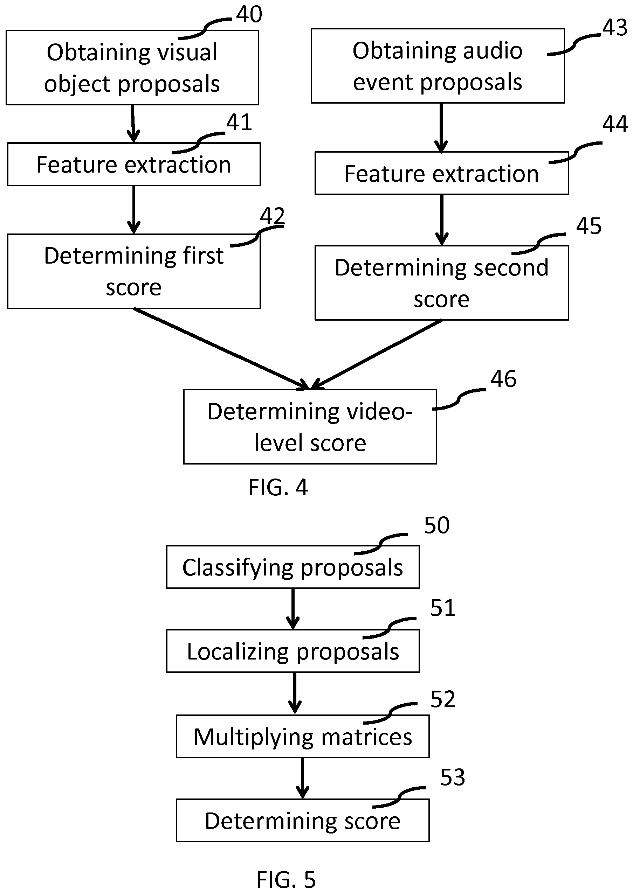

Figure 3 depicting the pipeline for going from audio-visual proposals (101, 102, 103, 111, 112, 113) to localization and classification is described below with reference to figures 4 and 5 illustrating an exemplary method for audio-visual events classification and localization, according to an embodiment of the present disclosure.

Here FC denotes fully connected layers. Here $FC_{cls}$ and $FC_{loc}$ refers to fully connected layers for classification and localization streams respectively. $\odot$ refers to element-wise multiplication and $\sum$ to a summation over proposals.

Such a system can comprise two-sub-networks: one sub-network for visual object proposals and one sub-network for audio event proposals.

It should be noted that, except for the feature extractors, both sub-networks can be designed in a same fashion and that a same set of classifiers is used for both sub-networks.

For the visual sub-network, in step 40, a set of visual object proposals is obtained from images of the video sequence.

Visual object proposals can be extracted from the images of the video using bounding boxes. For this, class-agnostic region proposals are computed from the extracted images. Depending upon embodiments, different algorithms can be used. For instance, in some embodiments algorithms like namely selective search, or edge boxes as presented in *Edge boxes: Locating object proposals from edges,* [Zitnick and Doll'ar, 2014, in European Conference on Computer Vision, pages 391-40, Springer] can be used.

According to at least some of the embodiments disclosed herein, the visual object proposals can be computed using edge-boxes algorithm with default parameters. Each of these visual object proposal is ranked by the algorithm with a confidence score that reflects "objectness", i.e. a score being representative of whether an object is present or not in the bounding box. Such an algorithm can provide one of the best speed/accuracy tradeoffs.

At step 41, features are extracted from each of the visual object proposals by feature extractor 22. For each visual object proposal, a fixed dimensional feature vector can be extracted, for instance using a deep CNN architecture for image classification (e.g. caffenet) with Region-of-Interest (ROI) pooling layer, as presented in *Fast R-CNN* [Girshick R. 2015, in IEEE International Conference on Computer Vision, pages 1440-1448]. The feature extractor 22 can comprise a module 220 performing a 5-convolutional layer and a module 221 performing two fully connected layers for ROI pooling. Feature maps after Region-of-Interest pooling can be of shape 256 x 6 x 6 for isnatnce. Images can be resized with the shortest side at 600 pixels and the longest side not greater than 1000. This resizing can eb optional in some embodiments.

In step 42, a first score for the set of visual object proposals can be determined with regards to a set of audio-visual event classes, also known as classifiers.

Step 42 is further explained with reference to figure 5 illustrating an exemplary method for determining a score for audio or visual proposals, with regards to a set of classifiers, according to an embodiment of the present disclosure.

The feature vectors are passed through fully connected layers, followed by two-stream classification layers $FC_{cls}$ and localization layers $FC_{loc}$, as presented in *Weakly supervised deep detection networks* [Bilen H. and Vedaldi A., 2016, in Proceedings of the IEEE Conference on Computer Vision and Pattern Recognition, pages 2846-2854]. The idea is to classify regions individually while also determining the best regions for a class, or in other words the regions the more relevant for a given class.

In step 50, each visual object proposal from the set of visual object proposals is classified with the regards to the set of classifiers, resulting in a classification score matrix. For this, given $K$ region proposals from a video, and $C$ classes, $FC_{cls}$ processes each region's feature vector through a linear layer, to give the classification score matrix $S \in \mathbb{R}^{K \times C}$ .

In step 51, for each class, a visual object proposal from the set of visual object proposals, that best matches the class is determined, resulting in a localization score matrix. For this, $FC_{loc}$ processes each region's feature vector parallelly to give a localization score matrix $D \in \mathbb{R}^{K \times C}$ .

The localization score matrix D is then passed through a SoftMax function that acts on each value of $D$ as: $\sigma(D_{kc}) = \frac{e^{D_{kc}}}{\sum_{k'} e^{D_{k'c}}}$, where $D_{kc}$ is the score in the matrice $D$ located at the $k^{th}$ column and $c^{th}$ line.

The SoftMax function normalizes the region scores for each class with the aim of giving higher weight to relevant regions for a class.

In step 52, the classification score matrix and the localization score matrices are multiplied element wise resulting in a product score matrix $P \in \mathbb{R}^{K \times C}$, with P having elements $P_{kc} = S_{kc} \times \sigma(D_{kc})$.

In step 53, the first score corresponding to a video-level score for the visual part of the video can be determined from the product score matrix P giving region-level scores.

According to a variant, for each class $c \in C$, scores over all the regions $k \in K$ can be summed to give a global class score vector for the video. Such a global class score vector gives a score value for each of the audio-visual event class.

According to another variant, the global class score can be obtained using only the classification stream, where the region $k$ providing the maximum score for the class $c$ in the classification score matrix $S$ can be used for video-level scoring.

Back to figures 3 and 4, the audio sub-network is now described below.

In step 43, a set of audio event proposals can be obtained from an audio stream of the video sequence.

In some embodiments, the audio event proposals can be obtained by extracting temporal proposals, i.e. small chunks or segments of audio from the extracted audio part (seen as a 1D waveform). For instance, audio event proposals are extracted uniformly, with a 960ms window, slided by 480ms.

In other embodiments, the audio event proposals can be spatio-temporal regions in the audio spectrogram and can be obtained by any audio event detection algorithms, source separation algorithms, as well as any audio selective search algorithms similarly to the visual selective search algorithms.

According to a variant, the extracted chunks may not overlap. According to another variant, the extracted chunks may not be of fixed-size.

In step 44, the feature extractor module 23 extracts, for each audio event proposal, a fixed dimensional feature vector. The feature vectors can be extracted, for instance, using a VGGISH network as presented in *Cnn architectures for large-scale audio classification* [Hershey, S., Chaudhuri, S., Ellis, D. P., Gemmeke, J. F., Jansen, A., Moore, R. C., Plakal, M., Platt, D., Saurous, R. A., Seybold, B., et al., in Acoustics, Speech and Signal Processing (ICASSP), 2017 IEEE International Conference on, pages 131-135].. The network outputs 128-dimensional feature vector.

In step 45, a score for the set of audio event proposals is determined with regards to the set of classifiers used for the visual object proposals. For this, extracted features can be passed to the module 25 for localization and classification, through FC layers and a two-stream module in a same manner as in the visual case and steps 50-53 of figure 5 are applied in a same way using the features extracted from the audio event proposals.

In step 46, for each video, a video-level score can be determined from the scores obtained from the visual sub-network and from the audio sub-network. The scores obtained from the visual sub-network and from the audio sub-network can be combined, for instance by adding the scores of each sub-network. In a variant, the video score can be a linear combination of the scores obtained from the visual sub-network and from the audio sub-network.

It should be noted that the method for classification and localization discussed above can not only classify but also localize the audio-visual events of the video sequence.

It should be noted that a video may contain more than a single audio-visual event. The system presented above can allow to classify (according to a given set of classes) and localize each of the audio-visual events that are comprised in the target video.

The deep architecture learning system disclosed above could have a wide range of applications from generating video metadata (such as tags, audio/visual characteristics etc.) to video surveillance and retrieval.

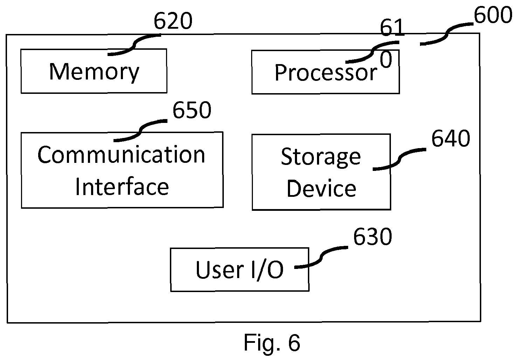

Figure 6 illustrates an exemplary apparatus for audio-visual events classification and localization according to an embodiment of the present disclosure. Figure 6 illustrates a block diagram of an exemplary system 600 in which various aspects of the exemplary embodiments may be implemented. The system 600 can be embodied as a device including the various components described below and can be configured to perform the processes and/or method described above. Examples of such devices, include, but are not limited to, mobile devices, personal computers, laptop computers, smartphones, tablet computers, digital multimedia set top boxes, digital television receivers, personal video recording systems, connected home appliances, and servers. The system 600 can be communicatively coupled to other similar systems, and to a display via a communication channel.

Herein, the term 'coupled' is defined to mean directly connected to or indirectly connected with through one or more intermediate components. Such intermediate components may include both hardware-based components and software-based components.

Various embodiments of the system 600 can include at least one processor 610 configured to execute instructions loaded therein for implementing the various processes and/or method as discussed above. The processor 610 can include embedded memory, input output interface, and various other circuitries as known in the art. The system 600 can also include at least one memory 620 (e.g., a volatile memory device, a non-volatile memory device). The system 600 can additionally include a storage device 640, which can include non-volatile memory, including, but not limited to, EEPROM, ROM, PROM, RAM, DRAM, SRAM, flash, magnetic disk drive, and/or optical disk drive. The storage device 640 can comprise an internal storage device, an attached storage device, and/or a network accessible storage device, as non-limiting examples.

Program code to be loaded onto one or more processors 610 to perform the various processes described hereinabove can be stored in the storage device 640 and subsequently loaded onto the memory 620 for execution by the processors 610. In accordance with at lest some of the exemplary embodiments, one or more of the processor(s) 610, the memory 620, and the storage device 640, can store one or more of the various items during the performance of the processes and/or method discussed herein above, including, but not limited to images, videos, audio signals, audio event proposals, visual object proposals, classifiers, score matrices, variables, operations, and operational logic.

The system 600 can also include a communication interface 650 that enables communication with other devices via a communication channel. The communication interface 650 can include, but is not limited to, a transceiver configured to transmit and receive data from the communication channel. The communication interface 650 can include, but is not limited to, a modem or network card and the communication channel 650 can be implemented within a wired and/or wireless medium. The various components of the system 600 can be connected or communicatively coupled together (not shown) using various suitable connections, including, but not limited to internal buses, wires, and printed circuit boards.

The system 600 can also include user interactions means 630 coupled to the processor for receiving user inputs (like a tactile display, a mouse, and so on)..

The exemplary embodiments can be carried out by computer software implemented by the processor 610 or by hardware, or by a combination of hardware and software. As a non-limiting example, the exemplary embodiments can be implemented by one or more integrated circuits. The memory 620 can be of any type appropriate to the technical environment and can be implemented using any appropriate data storage technology, such as optical memory devices, magnetic memory devices, semiconductor-based memory devices, fixed memory, and removable memory, as non-limiting examples. The processor 610 can be of any type appropriate to the technical environment, and can encompass one or more of microprocessors, general purpose computers, special purpose computers, and processors based on a multicore architecture, as non-limiting examples.

The implementations described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or a program). An apparatus can be implemented in, for example, appropriate hardware, software, and firmware. The methods can be implemented in, for example, an apparatus such as, for example, a processor, which refers to processing devices in general, including, for example, a computer, a microprocessor, an integrated circuit, or a programmable logic device. Processors can also include communication devices, such as, for example, computers, cell phones, portable/personal digital assistants ("PDAs"), tablets, and other devices that facilitate communication of information between end-users.

According to at least one embodiment of the present disclosure, the apparatus for audio-visual events classification and localization uses a pre-trained DNN network. For instance, the trained DNN network is received by the apparatus and the apparatus performs the method for classification and localization as disclosed in link with figure 4 and 5 using the received pre-trained DNN network.

According to this embodiment, training can be performed on another device, for instance a device having more processing capabilities than the apparatus itself.

According to another embodiment, the system disclosed above is trained for learning the parameters of the network. In such an embodiment, weakly-annotated data can be used for training a multiple instance learning framework. Weakly-annotated data corresponds, for instance, to video-level event associated with a label. The labels of all weakly-annotated data are used as a set of classifiers (or classes). Thus, the network, once trained, will be adapted to classify an audio-visual event according to this set of classifiers (or labels).

For example, consider a video labeled as 'dog barking'. Assuming that the dog is both visible and audible in the video, an aim of the present disclosure can be to correctly classify the video and at the same time locate the dog's presence spatially and the bark sound temporally.

To achieve this objective, multiple instance learning (MIL) framework can be used. Typically, MIL is applied to cases where labels are available over bags or set of instances, instead of individual instances. According to the present disclosure, each video is considered as a bag containing image regions and small chunks of audio. According to the principle disclosed herein, the training can consist in finding the best image region and audio chunk for each video event class (or label).

The DNN-based localization and classification training can be based for instance on Multiple Instance Learning frameworks, such as presented in Weakly supervised deep detection networks [Bilen H. and Vedaldi A., 2016, in Proceedings of the IEEE Conference on Computer Vision and Pattern Recognition, pages 2846-2854], or *Contextual Action Recognition with r*cnn* [Gkioxari G. Girshick R. and Malik J., 2015, in Proceedings of the IEEE International Conference on Computer Vision, pages 1080-1088.

In the exemplar embodiment described, a set of training videos and their labels is considered to be available for training the network disclosed herein. For example, 100 videos with the label 'train' and 200 videos with label 'car', ... etc. Such training videos, represented as image regions and audio chunks, and associated labels are used to train the system presented here for localization and classification. To train the module 24 of the system, the features of the visual object proposals extracted from the training videos are passed to the Multiple Instance Learning (MIL) module 24 for region classification and localization.

A similar process is performed for the module 25 for the audio event proposals.

As discussed above, a score is determined for each training videos for the visual part and a score is determined for each training videos for the audio part, and both scores are linearly combined to obtain a global score vector for each training videos.

The scores obtained at the output of the system are passed through a decision function such as sigmoid function or SoftMax function, which makes it a probability distribution. The probability distribution is then used with a ground-truth class vector, in a cross-entropy function.

The goal of the training is to minimize the cross-entropy function that compares the probability distribution given by a score of a training video and the ground-truth class vector. Classically, such a minimization may be performed through stochastic gradient descent.

It should be noted that by training the network presented here above, we have not only learnt to classify but also localize the audio-visual elements of the video sequences of the training set through their respective MIL modules. Once trained, the system disclosed above can then be used to get the global score for audio-visual event classification and localization of any video comprising one or many of the C classes used during training.

A method for audio-visual events classification and localization in a video sequence is disclosed. Such a method can comprise obtaining a set of audio event proposals from an audio stream of the video sequence, obtaining a set of visual object proposals from images of the video sequence, determining a first score for the set of visual object proposals with regards to a set of audio-visual event classes, determining a second score for the set of audio event proposals with regards to the set of audio-visual event classes, determining a video-level score by combining the first score and the second score.

Correlatively an apparatus for audio-visual events classification and localization in a video sequence is disclosed. Such an apparatus can comprise means for obtaining a set of audio event proposals from an audio stream of the video sequence, means for obtaining a set of visual object proposals from images of the video sequence, means for determining a first score for the set of visual object proposals with regards to a set of audio-visual event classes, means for determining a second score for the set of audio event proposals with regards to the set of audio-visual event classes, means for determining a video-level score by combining the first score and the second score.

According to at least one embodiment of the present disclosure, audio-visual event can be classified and localized in a video, both in the visual part and in the audio part of the video. Each modality (visual, audio) is classified and localized separately. Therefore, unsynchronized audio-visual events classification in a video sequence can be performed.

Furthermore, a same set of classifiers is used for audio classification and visual classification. Thus, a final video level score with regards to the set of classifiers can be obtained for the video sequence by aggregating a score determined for the audio part and a score determined for the visual part. For instance, the first score and the second score may be aggregated by a linear combination of both scores, notably addition.

According to at least one embodiment of the present disclosure, the set of visual object proposals comprises:

- spatial regions from an image of the video sequence,
- spatio-temporal regions from images of the video sequence.

According to at least one embodiment of the present disclosure, a visual object proposal may correspond to a region obtained from a single image of the video, or from a still image. A visual object proposal may also correspond to a spatio-temporal region obtained over frames of the video sequence, that is a spatial region that is followed over time in the video sequence, such a spatio-temporal region defining a spatio-temporal tube over frames of the video sequence. According to at least one embodiment of the present disclosure, the set of audio event proposals comprises:

- overlapping or non-overlapping temporal segments from the audio stream,
- overlapping or non-overlapping spatio-temporal regions in a spectrogram of the audio stream,
- statistical model-based proposals such as non-negative matrix factorization-based proposals.

According to at least one embodiment of the present disclosure, determining the first score, respectively determining the second score, comprises classifying each visual object proposal from the set of visual object proposals, respectively each audio event proposal from the set of audio event proposals, with the regards to the set of audio-visual event classes, resulting in a classification score matrix, determining for each audio-visual event class a visual object proposal from the set of visual object proposals, respectively a audio event proposal from the set of audio event proposals, that best matches the audio-visual event class, resulting in a localization score matrix, multiplying element by element the classification score matrix and the localization score matrix, resulting in a product score matrix, determining the first score, respectively the second score, from the product score matrix.

According to at least one embodiment of the present disclosure, each proposal, a segment or a region depending on the modality that is learnt, is classified according to the set of AV classifiers and for each AV class, a best proposal is determined for each modality. Therefore, the audio-visual events are not only classified but also localized in the video sequence. In other words, an audio proposal is localized temporally and/or spatially in the audio stream of the video sequence and a visual proposal is localized spatially and temporally in the visual part of the video sequence.

According to at least one embodiment of the present disclosure, determining the first score, respectively the second score, comprises combining, for each audio-visual event class, scores from the product score matrix, the first score, respectively the second score, corresponding to a score vector giving a score value for each of the audio-visual event class.

According to at least one embodiment of the present disclosure, determining the first score, respectively the second score, comprises determining the visual object proposal, respectively the audio event proposal, having the highest score in the product score matrix.

According to at least one embodiment of the present disclosure, a SoftMax function is applied to the localization score matrix.

According to at least one embodiment of the present disclosure, obtaining a set of audio event proposals from an audio stream of the video sequence comprises extracting fixed-size audio segments from the audio stream.

According to at least one embodiment of the present disclosure, obtaining a set of visual object proposals from images of the video sequence comprises determining bounding boxes in images of the video sequence that may comprise an object.

According to at least one embodiment of the present disclosure, the method disclosed above or the apparatus disclosed above further comprises extracting characteristic features from the audio event proposals, respectively visual object proposals.

While not explicitly described, the apparatus of the present disclosure can be adapted to perform the above method of the present disclosure in any of its embodiments

While not explicitly described, the present embodiments related to the method or to the corresponding apparatus can be employed in any combination or sub-combination.

One or more of the present embodiments also provide a computer readable storage medium having stored thereon instructions for audio-visual events classification and localization in a video sequence, according to any one of the embodiments of the method described above. The present embodiments also provide a computer program product including instructions for performing any one of the embodiments of the method described above.

As can be appreciated by one skilled in the art, aspects of the present principles can be embodied as a system, method, or computer readable medium. Accordingly, aspects of the present disclosure can take the form of a hardware embodiment, a software embodiment (including firmware, resident software, micro-code, and so forth), or an embodiment combining software and hardware aspects that can all generally be referred to herein as a "circuit", "module" or "system". Furthermore, aspects of the present principles can take the form of a computer readable storage medium. Any combination of one or more computer readable storage medium may be utilized.

A computer readable storage medium can take the form of a computer readable program product embodied in one or more computer readable medium and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage media to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it can be appreciated by those skilled in the art that the block diagrams presented herein represent conceptual views of illustrative system components and/or circuitry of some embodiments of the present principles. Similarly, it can be appreciated that any flow charts, flow diagrams, state transition diagrams, pseudo code, and the like represent various processes which may be substantially represented in computer readable storage media and so executed by a computer or processor, whether such computer or processor is explicitly shown.

**Claims**

1. A method for audio-visual events classification and localization in a video sequence, comprising:

   - obtaining (43) a set of audio event proposals from an audio stream of the video sequence,
   - obtaining (40) a set of visual object proposals from images of the video sequence,
   - determining (42) a first score for the set of visual object proposals with regards to a set of audio-visual event classes,
   - determining (45) a second score for the set of audio event proposals with regards to the set of audio-visual event classes,
   - determining (46) a video-level score by combining the first score and the second score.

2. An apparatus for audio-visual events classification and localization in a video sequence, comprising:

   - means (610, 620) for obtaining a set of audio event proposals from an audio stream of the video sequence,
   - means (610, 620) for obtaining a set of visual object proposals from images of the video sequence,
   - means (610, 620) for determining a first score for the set of visual object proposals with regards to a set of audio-visual event classes,
   - means (610, 620) for determining a second score for the set of audio event proposals with regards to the set of audio-visual event classes,
   - means (610, 620) for determining a video-level score by combining the first score and the second score.

3. The method according to claim 1 or the apparatus according to claim 2, wherein the set of visual object proposals comprises:

   - spatial regions from an image of the video sequence,
   - spatio-temporal regions from images of the video sequence.

4. The method according to claim 1 or the apparatus according to claim 2, wherein the set of audio event proposals comprises:

   - overlapping or non-overlapping temporal segments from the audio stream,
   - overlapping or non-overlapping spatio-temporal regions in a spectrogram of the audio stream,
   - statistical model-based proposals such as non-negative matrix factorization-based proposals.

5. The method according to claim 1 or the apparatus according to claim 2, wherein determining the first score, respectively determining the second score, comprises:

   - classifying each visual object proposal from the set of visual object proposals, respectively each audio event proposal from the set of audio event proposals, with the regards to the set of audio-visual event classes, resulting in a classification score matrix,
- determining for each audio-visual event class a visual object proposal from the set of visual object proposals, respectively an audio event proposal from the set of audio event proposals, that best matches the audio-visual event class, resulting in a localization score matrix,
- multiplying element by element the classification score matrix and the localization score matrix, resulting in a product score matrix,
- determining the first score, respectively the second score, from the product score matrix.

6. The method or the apparatus according to claim 5, wherein determining the first score, respectively the second score, comprises combining, for each audio-visual event class, scores from the product score matrix, the first score, respectively the second score, corresponding to a score vector giving a score value for each of the audio-visual event class.

7. The method or the apparatus according to claim 5, wherein determining the first score, respectively the second score, comprises determining the visual object proposal, respectively the audio event proposal, having the highest score in the product score matrix.

8. The method or the apparatus according to claim 5, wherein a SoftMax function is applied to the localization score matrix.

9. The method according to claim 1 or the apparatus according to claim 2, wherein obtaining a set of audio event proposals from an audio stream of the video sequence comprises extracting fixed-size audio segments from the audio stream.

10. The method according to claim 1 or the apparatus according to claim 2, wherein obtaining a set of visual object proposals from images of the video sequence comprises determining bounding boxes in images of the video sequence that may comprise an object.

11. The method according to claim 1 or the apparatus according to claim 2, further comprising extracting characteristic features from the audio event proposals, respectively visual object proposals.

12. A computer program comprising software code instructions for performing the method according to any one of claims 1 to 11, when the computer program is executed by a processor.

13. A computer readable storage medium comprising a computer program according to claim 12.

10

train's horn      train

time

FIG. 1

10

101
102
103

Visual object proposals

20

Feature Extraction

22

DNN-based Localization and Classification

24

Audio event proposals

21

Feature Extraction

23

DNN-based Localization and Classification

25

+

Video-level label classification

11

111
112
113

FIG. 2

FIG.3

```
                40                              43
┌──────────────────┐            ┌──────────────────┐
│  Obtaining visual │            │  Obtaining audio  │
│  object proposals │            │  event proposals  │
└──────────────────┘            └──────────────────┘
          │                               │
          ▼        41                      ▼        44
┌──────────────────┐            ┌──────────────────┐
│ Feature extraction│            │ Feature extraction│
└──────────────────┘            └──────────────────┘
          │                               │
          ▼        42                      ▼        45
┌──────────────────┐            ┌──────────────────┐
│  Determining first│            │ Determining second│
│       score       │            │       score       │
└──────────────────┘            └──────────────────┘
               \                        /
                \                      /
                 ▼        46          ▼
              ┌──────────────────┐
              │  Determining video-│
              │    level score     │
              └──────────────────┘
```

FIG. 4

```
                50
    ┌──────────────────┐
    │ Classifying proposals│
    └──────────────────┘
              │
              ▼        51
    ┌──────────────────┐
    │ Localizing proposals │
    └──────────────────┘
              │
              ▼        52
    ┌──────────────────┐
    │ Multiplying matrices │
    └──────────────────┘
              │
              ▼        53
    ┌──────────────────┐
    │  Determining score  │
    └──────────────────┘
```

FIG. 5

620   61   600

Memory      Processor 0

650

Communication Interface      Storage Device   640

630

User I/O

Fig. 6

Europäisches
Patentamt

European
Patent Office

Office européen
des brevets

# EUROPEAN SEARCH REPORT

**Application Number**

EP 18 30 5270

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2018/068198 A1 (SAVVIDES MARIOS [US] ET AL) 8 March 2018 (2018-03-08)<br>* paragraphs [0005], [0006], [0026], [0030]; claims; figures * | 1,2,12,13<br>3-11 | INV.<br>G06K9/00<br>G06K9/62 |
| X<br>A | US 2007/036431 A1 (TERAKAWA KENSUKE [JP]) 15 February 2007 (2007-02-15)<br>* paragraphs [0006], [0011] - [0024] * | 1,2,12,13<br>3-11 | |
| X<br>A | US 8 620 078 B1 (CHAPLEAU SYLVAIN [CA] ET AL) 31 December 2013 (2013-12-31)<br>* column 1, line 46 - column 4, line 11 * | 1,2,12,13<br>3-11 | |
| A | US 2016/284346 A1 (VISSER ERIK [US] ET AL) 29 September 2016 (2016-09-29)<br>* paragraphs [0004] - [0006]; claims * | 1-13 | |

**TECHNICAL FIELDS SEARCHED (IPC)**

G06K

The present search report has been drawn up for all claims

| Place of search | Date of completion of the search | Examiner |
|---|---|---|
| Munich | 15 June 2018 | D'Attilia, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 5270

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2018

| Patent document cited in search report | | Publication date | Patent family member(s) | | Publication date |
|---|---|---|---|---|---|
| US 2018068198 | A1 | 08-03-2018 | NONE | | |
| US 2007036431 | A1 | 15-02-2007 | JP | 4588575 B2 | 01-12-2010 |
| | | | JP | 2007047975 A | 22-02-2007 |
| | | | US | 2007036431 A1 | 15-02-2007 |
| US 8620078 | B1 | 31-12-2013 | US | 8620078 B1 | 31-12-2013 |
| | | | US | 8873856 B1 | 28-10-2014 |
| US 2016284346 | A1 | 29-09-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. ARANDJELOVI ; A. ZISSERMAN.** *Look, Listen and Learn, in International Conference on Computer Vision,* 2017
- **ZITNICK ; DOLL'AR.** European Conference on Computer Vision. Springer, 2014, 391-40
- **GIRSHICK R.** *IEEE International Conference on Computer Vision,* 2015, 1440-1448
- **BILEN H. ; VEDALDI A.** *Proceedings of the IEEE Conference on Computer Vision and Pattern Recognition,* 2016, 2846-2854
- **HERSHEY, S. ; CHAUDHURI, S. ; ELLIS, D. P. ; GEMMEKE, J. F. ; JANSEN, A. ; MOORE, R. C. ; PLAKAL, M. ; PLATT, D. ; SAUROUS, R. A. ; SEYBOLD, B. et al.** Acoustics, Speech and Signal Processing (ICASSP). *IEEE International Conference on,* 2017, 131-135
- Weakly supervised deep detection networks. **BILEN H. ; VEDALDI A.** Proceedings of the IEEE Conference on Computer Vision and Pattern Recognition. 2016, 2846-2854
- **GKIOXARI G. ; GIRSHICK R. ; MALIK J.** *Proceedings of the IEEE International Conference on Computer Vision,* 2015, 1080-1088